# EUROPEAN PATENT APPLICATION

(11) **EP 4 685 606 A1**
(43) Date of publication of application: **28.01.2026**
(21) Application number: 25190146.8
(22) Date of filing: 17.07.2025
(51) Int. Cl.: G05D 7/01, G05D 16/00, F16K 21/00, F16K 11/076

(54) **A CONTROL VALVE FOR SELECTIVELY REGULATING FLUID FLOW FROM TWO SOURCES**

(30) Priority: 24.07.2024 DK PA202470198
(71) Applicant: FRESE A/S, 4200 Slagelse (DK)
(72) Inventor: STÆHR, Lars, 4200 Slagelse (DK); BODEN, Sean, 4200 Slagelse (DK)
(74) Representative: AWA Denmark A/S

(57) **Abstract**

A control valve (1) for selectively regulating a fluid flow from one of two sources, comprising a housing with a first inlet (11), a second inlet (12), and an outlet, a flow selection element (55) rotatable around a centre axis (A) to bring the first inlet (11) or the second inlet (12) is in fluid communication with the outlet, said flow selection element (55) comprising a flow passage (51) comprising an axial section (51a) extending a distance along the centre axis (A) for the flow passage to be connectable at a first axial position (T1) to selectively one of the inlets (11; 12) and to be connectable to the outlet at a second axial position (T2), and a differential pressure regulator (100) arranged in the housing at an axial end of the control valve (1) and comprising a throttle member (106) axially movable along the centre axis (A).

## Description

### Technical field

The present disclosure relates to a control valve for selectively regulating a fluid flow to a device, such as a heating or cooling convector, said control valve comprising a housing comprising: a first inlet adapted to be connected to a first fluid source; a second inlet adapted to be connected to a second fluid source; and a first outlet adapted to be connected to the device, a flow selector arranged in the housing downstream of the first inlet and the second inlet and upstream of the outlet, and a differential pressure regulator arranged in the housing downstream of the flow selector and upstream of the outlet, where the flow selector comprises a flow selection element rotatable around a centre axis between a first angular position in which the first inlet is in fluid communication with the first outlet and a second angular position in which the second inlet is in fluid communication with the first outlet, said differential pressure regulator comprising a first side and a second side, a channel being provided to transfer a pressure at a selected one of the first inlet and the second inlet to the first side of the differential pressure regulator.

### Background

A control valve of the above kind is known from EP 3 483 692 A1 that discloses a control valve in the form of a 3-way ball valve comprising in a first embodiment two inlets and an outlet, a channel extending through a ball member through a course with a 90° bend to connect selectively one of the two inlets with the outlet. Between the ball member and the outlet, a differential pressure regulator is provided which entails that the housing of the control valve is very asymmetric which again entails difficulties in the production of the housing.

Another control valve of the above art is known from WO 2023/117002 A1.

Control valves such as three-way valves are often used in fluid systems comprising several fluid sources which need to be selectively coupled to a receiving device. An example of such systems is large Heating, Ventilation, and Air Condition (HVAC) systems used for controlling the indoor climate of buildings. Large HVAC systems often comprise one or more devices like heating and cooling convectors coupled to central sources of heating and cooling fluids, each device being coupled to the two fluid sources by a control valve such that the device may be selectively coupled to the heating or the cooling fluid source depending on whether the device is required to heat or cool.

Many HVAC systems further use the control valve to regulate the flow rate to the device by adjusting the inlet area, whereby a desired flow rate can be selected. However, as the flow rate depends not only on the inlet area but also on the expected pump pressure, such systems may be unreliable due to pressure fluctuations caused by varying loads or changes in the system. Such pressure fluctuations may cause the system to suffer from irregular flow as the control valve is unable to compensate for or adjust to varying pressure.

To mitigate the effects of pressure fluctuations, modern HVAC systems may be provided with a pressure independent control valve, PICV, comprising a differential pressure regulator , DPR . PICVs are capable of both regulating the flow rate by adjusting the size of an inlet area and maintain a substantially constant differential pressure over the inlet area, whereby the desired flow to the device is achieved despite pressure fluctuations in the system. As a result, such systems may be run at lower pump pressures, whereby energy consumption and running costs are reduced, and noise generated by the pump of the system is lowered.

Three-way- PICV valves reduce the costs, installation time, and complexity of a system compared to their segregated counterparts and are known from WO 2023/117002. However, there are still room for improvement, since known three-way-PICV valves are asymmetric due to the DPR which can be disadvantageous.

### Summary of invention

It is an object of the present disclosure to provide a control valve which solves or alleviates at least some of the problems of the prior art.

This is achieved by a control valve for selectively regulating a fluid flow to a device, such as a heating or cooling convector, said control valve comprising a housing comprising: a first inlet adapted to be connected to a first fluid source; a second inlet adapted to be connected to a second fluid source; and a first outlet adapted to be connected to the device, a flow selector arranged in the housing downstream of the first inlet and the second inlet and upstream of the first outlet, and a differential pressure regulator arranged in the housing downstream of the flow selector and upstream of the first outlet, where the flow selector comprises a flow selection element rotatable around a centre axis between a first angular position in which the first inlet is in fluid communication with the first outlet and a second angular position in which the second inlet is in fluid communication with the first outlet, said differential pressure regulator comprising a first side and a second side, a channel being provided to transfer a pressure from a selected one of the first inlet and the second inlet to the first side of the differential pressure regulator, wherein said flow selection element comprises a first flow passage comprising an axial section extending a distance along the centre axis for said first flow passage to be connectable at a first axial position along the centre axis to selectively one of said first inlet and said second inlet by rotation of the flow selection element around the centre axis, and to be connectable to the outlet at a second axial position along the centre axis, and in which the differential pressure regulator is provided at a first axial end of the control valve and comprises a throttle member comprising a circumferential rim part extending around the centre axis, the throttle member being axially movable along the centre axis for the circumferential rim part to approach, due to pressure transferred through the channel, a circumferential valve seat for said circumferential rim part, whereby a flow path extends from selectively one of said first and second inlet, through the first flow passage of the flow selection element, past the throttle member, between the circumferential rim part and the circumferential valve seat, and out through the first outlet.

By providing the flow selection element with first flow passage comprising an axial section extending a distance along the centre axis between the first position and the second position as mentioned, it is possible to place the differential pressure regulator at a first axial end of the control valve, or at a first axial end of the housing thereof, whereby a circumferential rim part, and the corresponding circumferential valve seat, extend around the centre axis. The differential pressure regulator thereby being positioned basically coaxial relative to the centre axis, the asymmetry provided in the housing of the control valve of EP 3 483 692 A1 by the position of the differential pressure regulator therein, is greatly reduced.

In an embodiment said flow selection element at said first position comprises a first radial channel and a second radial channel extending from the first flow passage to a circumference of the flow selection element, said first radial channel and said second radial channel extending radially at a radial angle relative to each other, said first radial channel and said second radial channel being respectively and selectively connectable to the first inlet and/or the second inlet. In this embodiment the first inlet or the second inlet may be selected for connection with the first outlet by rotating the flow selection element into an angular position in which one of the first radial channel and the second radial channel is aligned with one of the first inlet and the second inlet, respectively.

By "radial angle" is meant an angle projected on a radial plane i.e. a plane perpendicular to the centre axis.

To keep the construction simple the first inlet and the second inlet are preferably radial inlets extending radially relative to the centre axis.

The angle between the first radial channel and the second radial channel may be a right angle, but other angles are possible though right angles may provide some constructional advantages, especially for certain embodiments.

The first and second radial channels may be positioned in a common first radial plane perpendicular to the centre axis, or at least be positioned to have respective openings in the circumference of the flow selection element positioned in a common first radial plane perpendicular to the centre axis, but depending on a specific embodiment the first radial channel and the second radial channel may be positioned at different levels.

It should be understood that herein an "axial position" refers to a range along the centre axis and in specific cases the extend of such a range may be reduced generally to a point along the centre axis, e.g. a specific radial plane perpendicular to the centre axis.

In an embodiment the flow selector comprises a flow regulator element said flow selection element and said flow regulator element comprising respective coaxial surfaces of revolution comprising respective openings capable of being brought into and out of alignment to provide an overlap opening by rotation of the flow selection element and flow regulator element relative to each other around the centre axis for adjustment of a flow through said overlap opening.

Conveniently, the flow regulator element may be kept in a fixed, especially angular, position during use whereby the relative rotation between the flow selection element and the flow regulator element is provided by the rotation of the flow selection element around the centre axis.

In use fluid is flowing through the more or less aligned openings in the respective coaxial surfaces of revolution and an instant area of the overlap opening is provided through the two coaxial surfaces of revolution. By the alignment of the respective openings the size of said instant area can be adjusted, thus controlling the flow subject to the pressure difference across the overlap opening and the size of the instant area.

One of said openings in a first of said coaxial surfaces of revolution and one of said openings in a second of said coaxial surfaces of revolution comprise edges following different courses along the centre axis, said edges being provided at different sides of the respective openings in a circumferential direction.

Hereby, when the openings provided respectively through the two coaxial surfaces of revolution are almost out of alignment to leave only a minimal overlap opening for fluid to flow through, a given small mutual rotation of the two coaxial surfaces of revolution will result in only a small amendment of the area open for flow of the fluid along only a minor part of the edges in question, thus providing for gradual enlargement of the area open for flow and fine tuning of the size of the overlap opening close to zero.

One of said coaxial surfaces of revolution of said flow selection element and said flow regulator element may comprise one opening of said openings and the other of said coaxial surfaces of revolution may comprise two openings of said openings.

Hereby, the three mentioned openings may be positioned in such a way in their respective coaxial surfaces of revolution that the said one opening and one of said two openings are getting respectively aligned when the flow selection element is being rotated into a position for selecting the first or the second inlet for connection to the first outlet. Preferably said selection of the first inlet or the second inlet is advanced to a degree whereby the pressure of fluid at the selected inlet has reached an innermost of the coaxial surfaces of revolution before the alignment of the two openings in the coaxial surfaces of revolution provides an overlap opening thereby providing for a flow of fluid. This may be provided for by the mutual circumferential positions of the first and second inlet, the openings in the flow regulator element, and the openings in the flow selection element.

Hereby, in an embodiment said one opening and at least one of said two openings comprise edges following different courses along the centre axis as discussed above.

Also hereby said flow regulator element may be a stationary element in the housing as likewise discussed above.

In convenient embodiments the surfaces of revolution are conical or cylindrical surfaces, which facilitates production.

In an embodiment the coaxial surface of revolution of the flow selection element is an external surface and positioned radially closer to the centre axis than the coaxial surface of revolution of the flow regulator element which is an internal surface.

Hereby a part of the flow selection element comprising one of said coaxial surfaces of revolution is placed within a part of the flow regulator element comprising the other of said coaxial surfaces of revolution. It is however possible to provide vice versa, whereby a part of the flow regulator element comprising one of said coaxial surfaces of revolution is placed within a part of the flow selection element comprising the other of said coaxial surfaces of revolution.

In an embodiment the flow selection element is axially open at an end adjacent the first outlet, and the flow regulator element comprises an aperture providing said channel for transferring a pressure at a selected one of the first inlet and the second inlet to the first side of the differential pressure regulator.

Hereby the fluid flowing from the selected one of the first inlet and the second inlet, and flowing towards a wall part comprising the innermost of the coaxial surfaces of revolution to flow through the overlap opening provided by the aligned openings in the coaxial surfaces of revolution may seep through the channel or aperture and the pressure of said fluid will be transferred to the first side of the differential pressure regulator whereby the circumferential rim part of the differential pressure regulator will approach the circumferential valve seat and regulate the overall pressure difference between the selected inlet and the first outlet, as it is generally known in the art.

In some embodiments the control valve further comprises a return inlet, a first return outlet and a second return outlet,
where the return inlet and the first return outlet are in fluid communication through the flow selection element when the flow selection element is in the first position, and where the return inlet and the second return outlet are in fluid communication through the flow selection element, when the flow selection element is in the second position.

Hereby, as it is also known from some embodiments of the control valve disclosed in the above-mentioned EP 3 483 692 A1, the control valve provides for returning fluid, that has been passed through a device, to the respective source attached to the selected one of the first and second inlet.

In an embodiment the first return outlet and the second return outlet are positioned in a second radial plane perpendicular to the centre axis.

In an embodiment the return inlet is a radial return inlet, and in a further embodiment the radial return inlet, the first return outlet, and the second return outlet are positioned in the second radial plane perpendicular to the centre axis.

In an embodiment the flow selection element at a third axial position along the centre axis comprises a third radial channel and a fourth radial channel extending from an internal space to the circumference of the flow selection element, said third radial channel and said fourth radial channel extending radially at a radial angle relative to each other, said third radial channel and said fourth radial channel being respectively and selectively connectable to the first return outlet and/or the second return outlet. In this embodiment the first return outlet or the second return outlet may be selected for connection with the return inlet by rotating the flow selection element into an angular position in which one of the third radial channel and the fourth radial channel is aligned with one of the first return outlet and the second return outlet, respectively.

To keep the construction simple the first return outlet and the second return outlet are preferably radial outlets extending radially relative to the centre axis.

The angle between the third radial channel and the fourth radial channel may be a right angle, but other angles are possible though right angles may provide some constructional advantages, especially for certain embodiments.

The third radial channel and the fourth radial channel may be positioned in a common third radial plane perpendicular to the centre axis, or at least be positioned to have respective openings in the circumference of the flow selection element positioned in a common third radial plane perpendicular to the centre axis, but depending on a specific embodiment the third radial channel and the fourth radial channel may be positioned at different levels within the range of the third axial position.

In some embodiments the third axial position is found on the opposite side of the first axial position relative to the second axial position. This may provide some constructional benefits.

In some embodiments a spindle part of the flow selection element is provided at an opposite axial end of the control valve relative to the first axial end to be connected to an actuator for rotating the flow selection element. Hereby is provided for connecting an actuator to the control valve for rotating the flow selection element to select the first inlet or the second inlet and possibly to further adjust the size of an overlap opening and further possibly to select the first return outlet or the second return outlet in correspondence with the selection of the first inlet or the second inlet.

In another embodiment the return inlet comprises an axial return inlet positioned at an opposite axial end of the control valve relative to the first axial end, and the internal space is provided by a second flow passage extending from the third and fourth radial channels to an axial end of the flow selection element to be connected to the axial return inlet. Hereby the return inlet may always be open regardless of the angular position of the flow selection element.

In a further embodiment the housing comprises a flushing outlet positioned in a first radial plane or the first radial plane perpendicular to the centre axis in which also the first inlet and the second inlet are positioned. Hereby it is possible to flush the fluid in question from the selected inlet and out the flushing outlet thereby bypassing the differential pressure regulator.

In an embodiment the control valve comprises a means for rotating the flow selection element, said means being provided between the two axial ends of the control valve or between the two axial ends of the housing and comprises a connection element for connection with an actuator. Hereby is obtained that both axial ends of the control valve and/or the housing thereof may be free from any actuator to provide for the presence of e.g. an axial return inlet and/or a differential pressure regulator.

In such embodiment said means rotating the flow selection element may comprise a circumferential cogwheel provided on the flow selection element, and further said means rotating the flow selection element may comprise a rotating device like a worm element engaging the cogwheel, said rotating device or worm element comprising a spindle part to provide the connection element for connection with the actuator. Hereby it is possible to fine tune the angular position of the flow selection element.

In an embodiment the control valve comprises both said radial return inlet and said axial return inlet. Hereby it is possible to use one of said return inlets, e.g. the radial return inlet for receiving fluid that has been let out through the flushing outlet, and to use the other of said return inlets, e.g. the axial return inlet for receiving fluid during normal operation.

In an embodiment the control valve comprises a tube element (19) connected to the flushing outlet (18) and to the radial return inlet (14).

In a different embodiment the control valve comprises a tube element (19) connected to the flushing outlet (18) and to the first outlet (13) whereby said tube element (19) comprises a common outlet.

By having the tube connected to the radial return inlet it is possible to bypass the device during flushing, and by having the tube connected to the first outlet it is possible to flush through the device.

In an embodiment the control valve comprises a physical blocking mechanism limiting a possible angle of rotation of the flow selection element around a centre axis. Such blocking mechanism facilitates regulation of the valve.

In an embodiment of the control valve at least at the first inlet and the second inlet a sealing is provided to seal between the respective inlet and the flow selection element, an axial space being present between the flow selection element and a wall of the housing, sealings are provided to divide axial sections of said space, and preferably a pt-plug is mounted in the wall of the housing at at least one of said axial sections. By providing by the sealings sections between the wall of the housing and the flow selection element mounting of pt-plugs for measuring e.g. P1 and P2 are facilitated.

### Brief Description of Drawings

In the following the disclosure will be explained in further detail by means of non-limiting examples of specific embodiments having reference to the accompanying drawings, in which:
Fig. 1 shows a control valve in a first embodiment;
Fig. 2 is a section through the valve of Fig. 1;
Fig 3 shows a flow selector of the valve;
Fig. 4 shows a detail of Fig. 2;
Figs. 5i, 6i, and 7i show sections along a first radial plane T1;
Figs. 5ii, 6ii, and 7ii show sections along a second radial plane T2;
Fig. 8 shows a control valve in a second embodiment;
Fig. 9 is an exploded view of the valve of Fig. 8;
Fig. 10i, 11i, and 12i show sections along the first radial plane T1;
Fig. 10ii, 11ii, and 12ii show sections along the second radial plane T2;

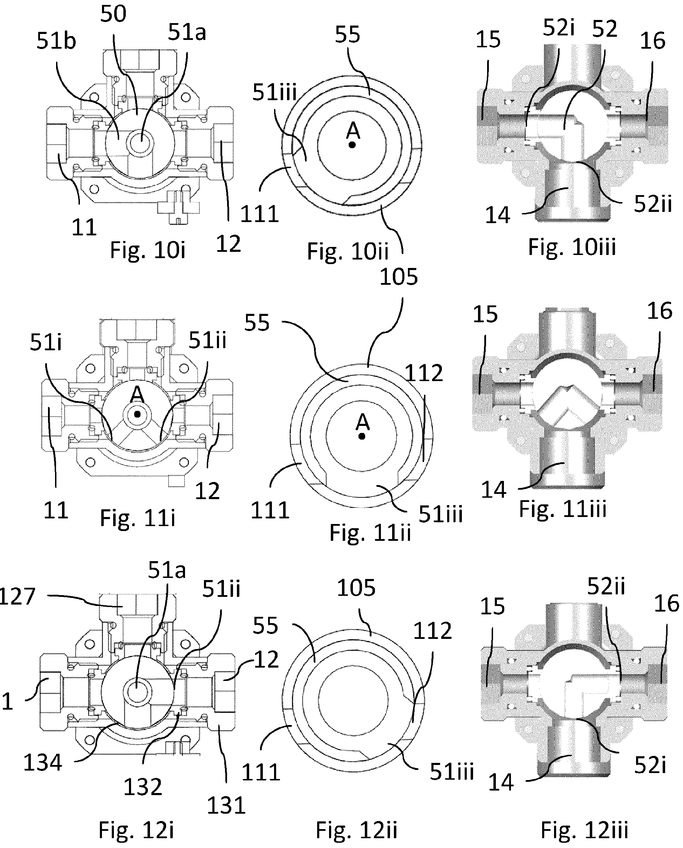

Fig. 10iii, 11iii, and 12iii show sections along a third radial plane T3;

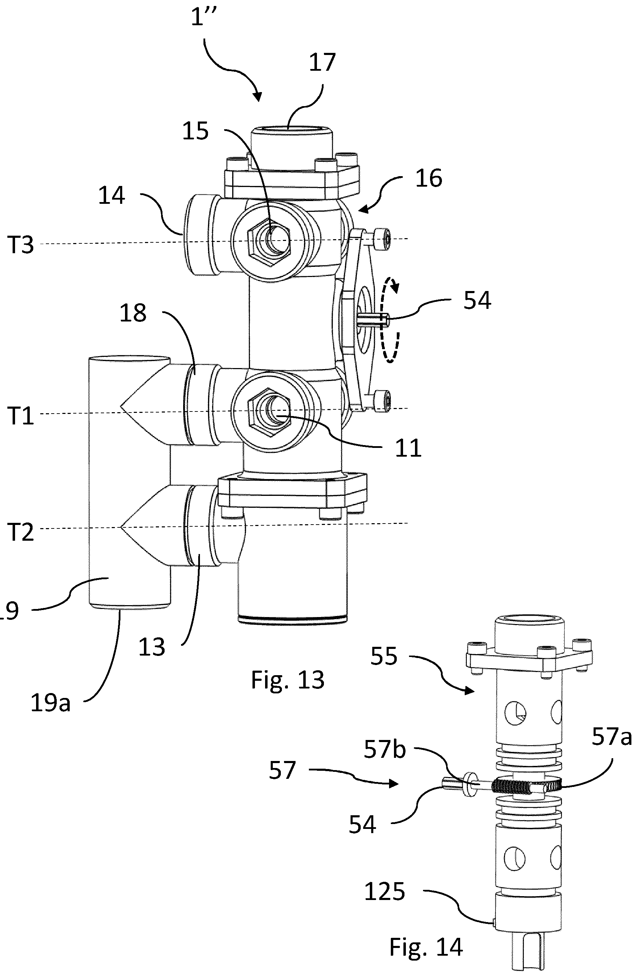

Fig. 13 shows a control valve in a third embodiment;
Fig. 14 shows details of the control valve of Fig. 13;

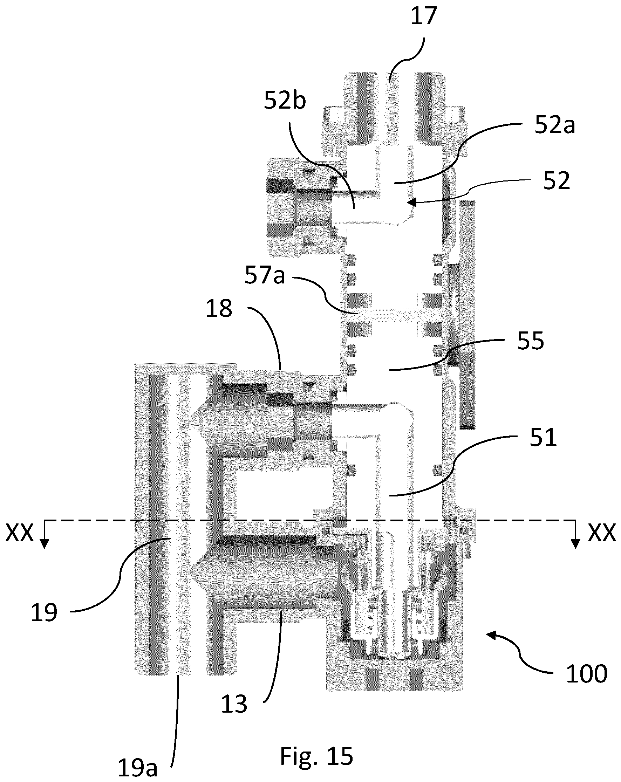

Fig. 15 is a section of the control valve of Fig. 13;

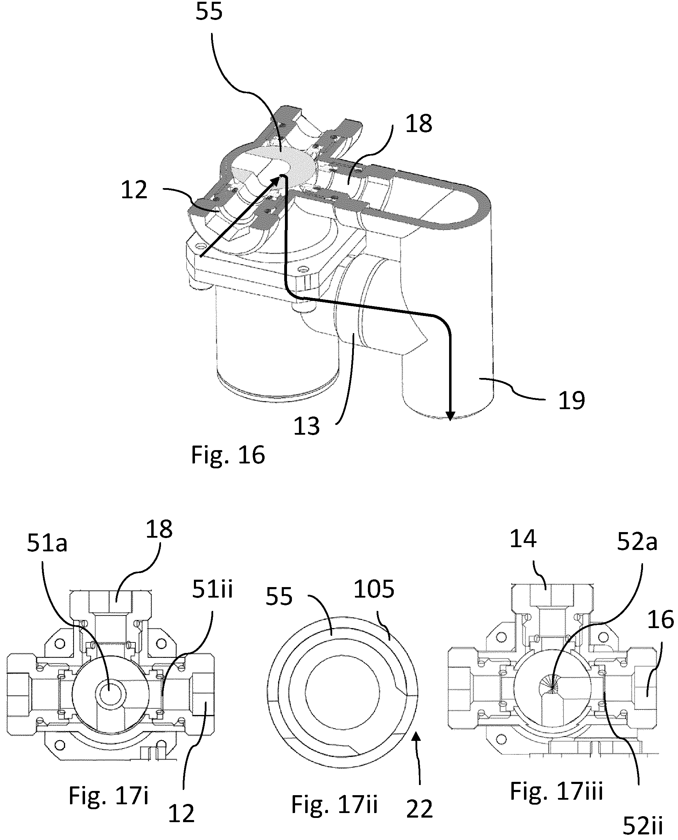

Fig. 16 is another section of the control valve of Fig. 13 having the flow selector in one position;
Figs. 17i, 17ii, and 17iii show sections along the first, second, and third radial planes T1, T2, and T3, respectively, the flow selector being in said one position;

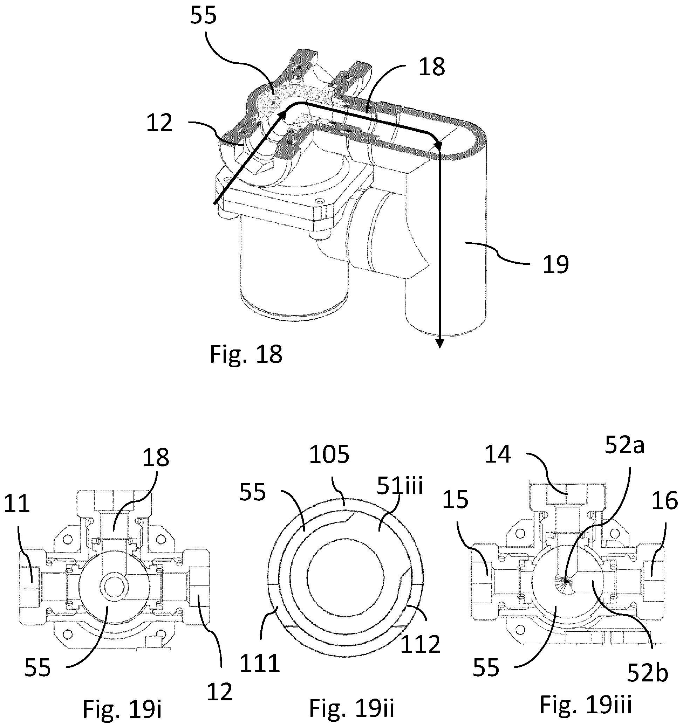

Fig. 18 is another section of the control valve of Fig. 13 having the flow selector in another position;
Figs. 19i, 19ii, and 19iii show sections along the first, second, and third radial planes T1, T2, and T3, respectively, the flow selector being in said other position; and

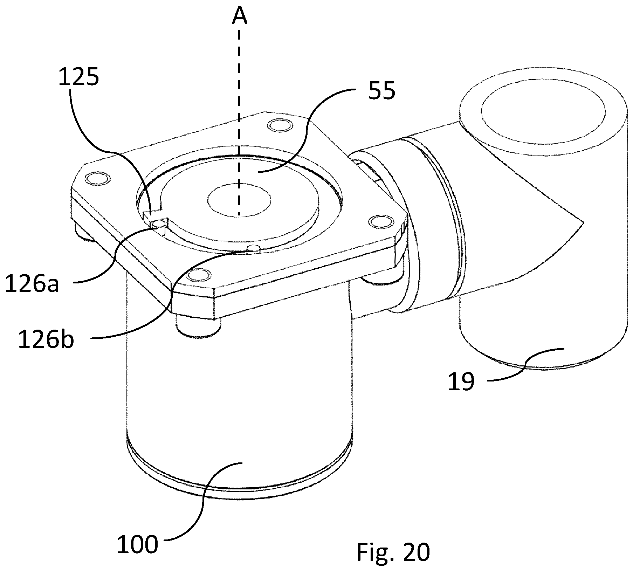

Fig. 20 is a section as indicated by line XX-XX in Fig. 15.

### Detailed description

Initially it should be noted that herein when terms like "up", "upper", "down", and "lower" are used reference is made to the features, especially the valve, in their positions as shown in the Figures. In practical use such features and valves may be turned upside down.

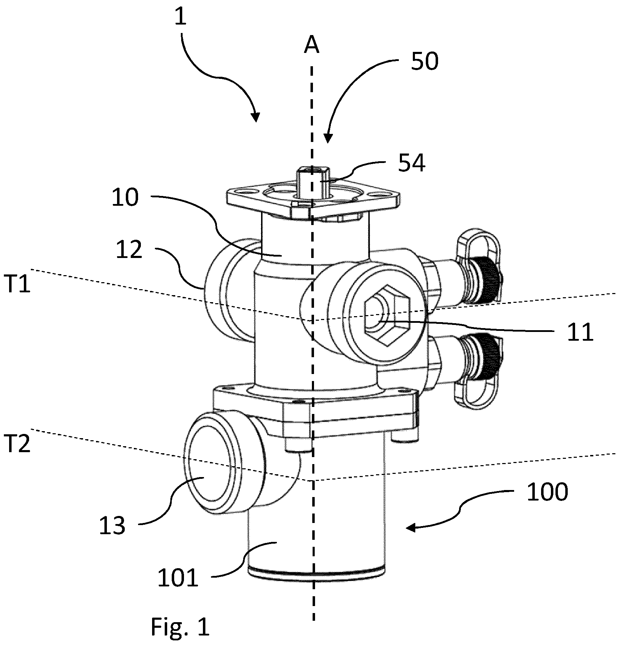

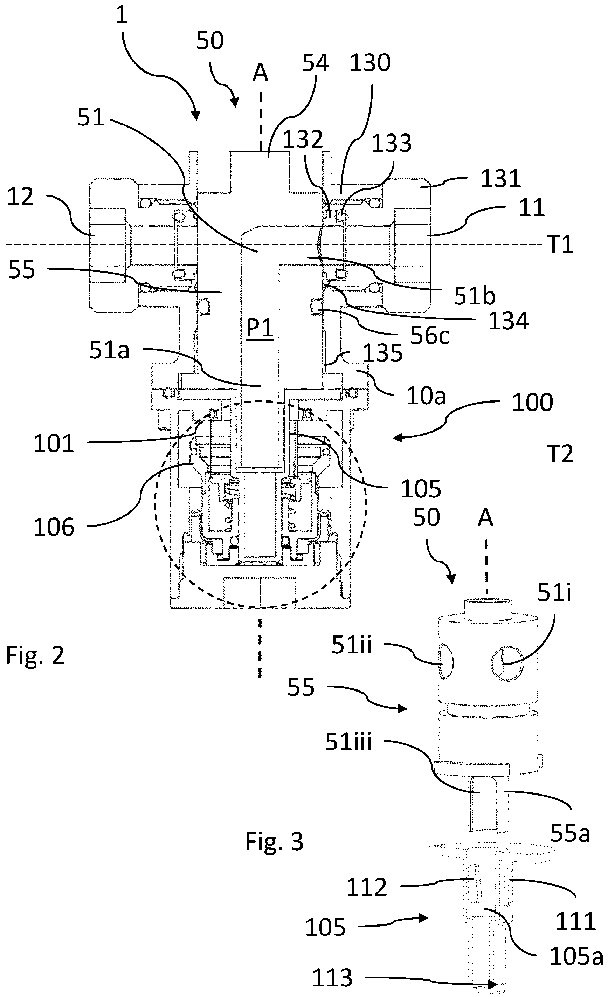

Figs. 1 and 2 show a control valve 1, which is for selectively regulating a fluid flow to a device such as a heating or cooling convector (not shown). The control valve 1 comprises a housing 10 with a hollow centre.

The housing 10 comprises a first inlet 11 adapted to be connected to a first fluid source (not shown), a second inlet 12 adapted to be connected to a second fluid source (not shown) and a first outlet 13, or simply, outlet 13, adapted to be connected to the device. The control valve 1 is particularly suited for use in Heating, Ventilation, and Air Condition (HVAC) systems, where the outlet 13 may be connected to a device, e.g. a heating or cooling convector, and the first inlet 11 can be connected to a first fluid source supplying a first fluid, e.g. a heating fluid, to the device and the second inlet 12 can be connected to a second fluid source supplying a second fluid, e.g. a coolant, to the device.

A flow selector 50 is arranged in the hollow centre of the housing 10 and is best visualized in Figs. 2 to 3. The flow selector 50 is arranged downstream of the first inlet 11 and the second inlet 12 and upstream of the outlet 13 and comprises a flow selection element 55 and a flow regulator element 105 arranged to rotate relative to each other.

In the present embodiment the flow selector 50 comprises the flow selection element 55 which is rotatable around a centre axis A between a first angular position in which the first inlet 11 is in fluid communication with the outlet 13 and a second angular position in which the second inlet 12 is in fluid communication with the outlet 13, allowing a user to select which of the first and second inlets, 11, 12 is in fluid communication with the outlet 13. The flow selector 50 further comprises the flow regulator element 105, which will be explained in greater details below.

Generally, for all shown embodiments, the flow selection element 55 may be connected to e.g. an electronic actuator (not shown) e.g. via a spindle 54, configured to rotate the flow selection element 55 around the centre axis A allowing a user to select and control the fluid source and the flow rate remotely and with high precision.

The flow selection element 55 comprises a first flow passage 51 with an axial section 51a extending a distance along the centre axis A and a radial section 51b extending from the axial section 51a to a circumference of the flow selection element 55. The radial section 51b comprises a first radial channel and a second radial channel extending radially at a right angle relative to each other.

The first flow passage 51 is connectable at a first axial position to selectively one of said first inlet 11 and said second inlet 12 by rotation of the flow selection element 55 around the centre axis A. The first axial position defines a range or length interval along the centre axis A. In Figs. 1 and 2 the centre of the first inlet 11 and the centre of the second inlet 12 are arranged in a first radial plane T1 in the first axial position but may in other embodiments be arranged in different radial planes within the range of the first axial position. The axial section 51a extends through the centre of the flow selection element 55, however embodiments may be envisioned where the axial section is wholly or partly arranged shifted by a distance from the centre axis A e.g. in parallel with the centre axis A.

The first and second radial channels of the radial section 51b are selectively connectable to the first inlet 11 and second inlet 12. The first radial channel extends to the circumference of the flow selection element 55 at opening 51i. The second radial channel extends to the circumference of the flow selection element 55 at opening 51ii.

At a second axial position the first flow passage 51 is connectable to the outlet 13. In the shown embodiments, the outlet 13 is arranged in a second radial plane T2 perpendicular to the centre axis A. In another embodiment the outlet 13 may be arranged at an angle from the plane T2. The axial section 51a extends through the flow selection element 55 to an opening 51iii.

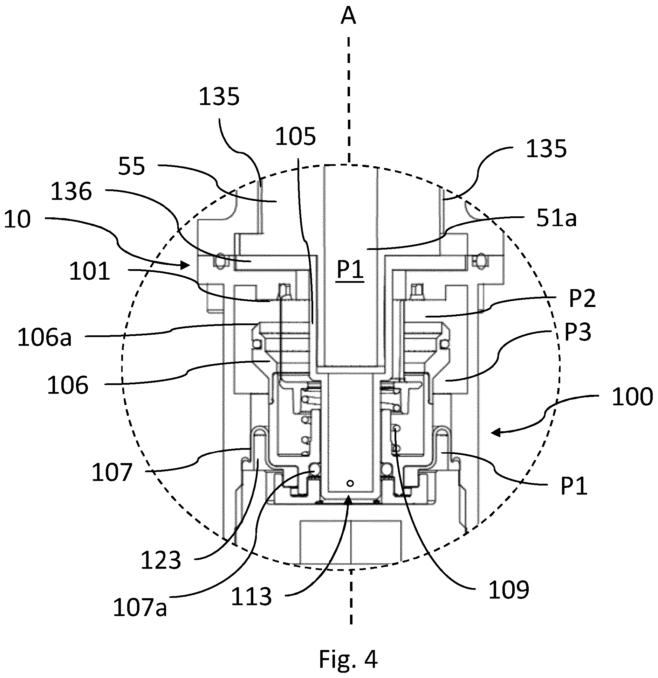

The valve 1 further comprises a differential pressure regulator 100, DPR, arranged downstream of the flow selector 50 and upstream of the outlet 13. The DPR 100 comprises a first side and a second side, and a -channel, such as a capillary channel or tube is provided to transfer a pressure at a selected one of the first inlet and the second inlet to the first side of the DPR 100. In the present embodiment the channel is provided by an aperture 113 in the flow regulator element 105 and is best visualized in Figs. 3 and 4.

As best shown in Fig. 4, the DPR 100 comprises a throttle member 106 with a circumferential rim part 106a extending around the centre axis A. The throttle member 106 is axially movable along the centre axis A for the circumferential rim part 106a to approach a circumferential valve seat 101 for said circumferential rim part 106a, due to pressure transferred through the aperture 113 to a chamber 123 at the first side of the DPR.

A pressure P1 exists in the first flow passage 51 and on the first side of the DPR in the chamber 123. On the second side of the DPR a pressure P2 exists on an inside of the DPR 100 defined between the flow regulator element 105 and the circumferential rim part 106a. Downstream of the DPR, between the circumferential rim part 106a and the outlet 13 a pressure P3 exists.

The DPR comprises a rolling diaphragm 107 supported by the throttle member 106 and the pressure P1 is transferred to the chamber 123 on the first side of the DPR, i.e. the outer side of the rolling diaphragm 107 via the aperture 113 in the flow regulator element 105. The chamber 123 is sealed from the second side of the DPR by the rolling diaphragm 107 and a sealing member 107a, such as an O-ring.

The DPR further comprises a spring 109, and the pressure difference across the DPR is maintained by the balancing of the pressure P1 urging the throttle member 106 towards the valve seat 101, and the pressure P2 and the spring 109 urging the throttle member 106 away from the valve seat.

Returning to Fig. 3, the flow selection element 55 and the flow regulator element 105 comprises respective coaxial surfaces of revolution 55a, 105a with respective openings 51iii; 111, 112. The respective openings are capable of being brought into and out of alignment by rotation of the flow selection element 55 and the flow regulator element 105 relative to each other around the centre axis A for adjustment of a flow through said overlapping openings 51iii; 111, 112. Thus, by rotation of the flow selection element 55 into one position an overlap opening 22 is provided by openings 51iii and 111 and by rotation of the flow selection element 55 into a second position the overlap opening 22 is provided by the openings 51iii and 112. Rotation into the first and the second position is made in connection with selection of the first inlet 11 or the second inlet 12.

It should be understood that the above mentioned first and second positions are respectively angular intervals and rotation of the flow selection element within the respective interval will adjust a size of and flow through the current overlap opening 22.

A flow path extends from selectively one of said first and second inlets 11, 12, through the flow passage 51 of the flow selection element 55, through the overlap opening 22 to inside of the DPR 100, the inside being between the overlap opening 22 and the circumferential rim part 106a of the throttle member 106, and out through the outlet 13.

In the shown embodiments, openings 111 and 112 comprise edges that follow different courses along the centre axis A than opening 51iii for adjustment of a flow through said overlapping openings. By choosing a specific difference in courses of the respective edges, the through flow characteristics through the overlapping opening can be adjusted. In Fig. 3, the openings 111, 112 each has an inclined edge relative to respective edges of the opening 51iii that extend in an axial direction parallel to the centre axis A. Due to the inclination a small corner of either opening 111, 112 overlaps with 51iii in an initial part of the interval of either the first or second position. The through flow gradually increases by further rotation of the flow selection element 55 until a max through flow is reach when the openings fully overlap. This prevents a sudden drop or increase in through flow and instead provides a gradual flow gradient, especially when the overlap opening is close to zero.

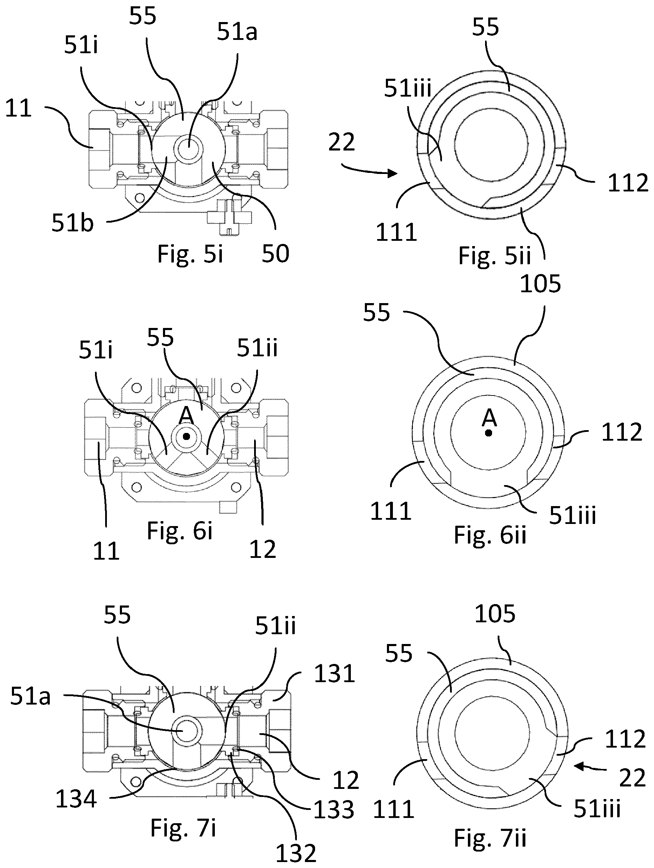

Figs 5i, 5ii and 6i, 6ii and 7i, 7ii show the openings of the valve at the first position, a closed position, and the second position, respectively. Figs. 5ii and 7ii show the overlap opening 22 being established by overlapping openings 51iii and 111 (Fig. 5ii), and openings 51iii and 112 (Fig. 7ii), respectively, whereas Figs. 5i and 7i show the inlets 11, 12 overlapping with opening 51i, 51ii, respectively, and Figs. 6i and 6ii show the closed position of the valve 1 wherein no overlaps between the openings just mentioned are present.

Starting from Fig. 5i the valve is in the first position. The position of the first flow regulating element 55 provides an overlap between opening 51i of the radial section 51b and inlet 11. At the same angular position of the first flow regulating element 55, the overlapping openings 51iii and 111 provide the overlap opening 22, shown in Fig. 5ii, while keeping the opening 112 blocked. A fluid flows through the opening 51i, down via the axial section 51a, and out through the overlap opening 22 to the DPR 100.

In Figs. 6i and 6ii the flow selection element 55 has been rotated 45 degrees in the counterclockwise direction relative to the first position thereby providing the closed position where all openings are blocked.

In Figs. 7i and 7ii the flow selection element 55 has been rotated a further 45 degrees in the counterclockwise direction to the second position of the valve, wherein the second inlet 12 overlaps with opening 51ii of the second radial channel. Similarly, in the same angular position of the flow selection element 55, the opening 51iii overlaps with opening 112 providing the overlap opening 22. A fluid flows through the opening 51ii, down via the axial section 51a, and out through the overlap opening 22 to the DPR 100.

In the first position, the area of the overlapping openings 51iii and 111 is smaller than the area of the overlapping openings 11 and 51i. Similarly, in the second position, the area of the overlapping openings 51iii and 112 is smaller than the area of the overlapping openings 12 and 51ii. Hereby is provided for the pressure P1 to reach the aperture 113 and the first side of the DPR 100.

Further, when rotating the flow selection element 55 from the closed position shown in Figs 6i and 6ii towards any of the first and the second position to open the valve flow from either the first inlet 11 or the second inlet 12, an opening will be established between the respective inlet 11 or 12 and the radial section 51b before the overlap opening 22 is established.

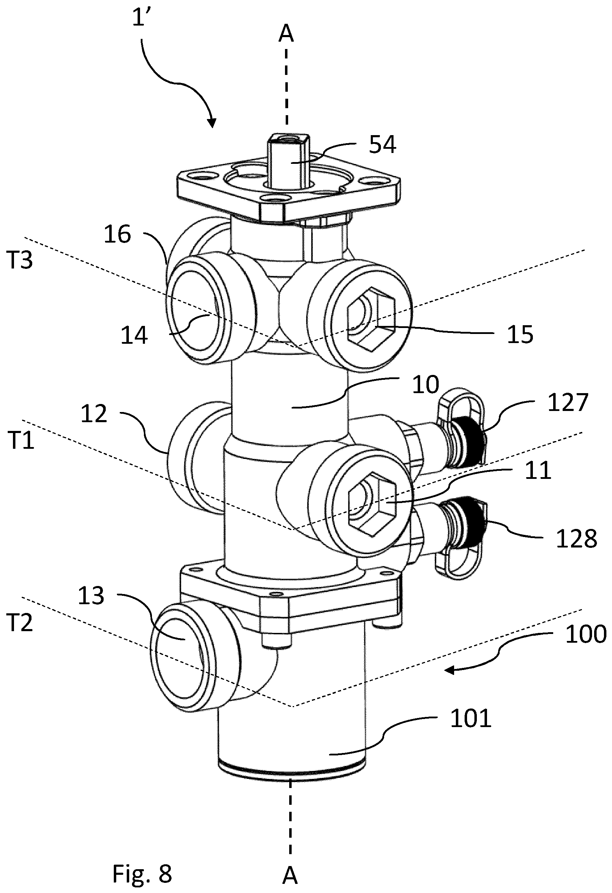

Turning to Fig. 8 a modified version of the valve 1 is shown. In this embodiment the valve 1', apart from what has been described above having reference to Figs. 1 to 7 (7i and 7ii), further comprises a return inlet 14, a first return outlet 15 and a second return outlet 16. The return inlet 14 and the first return outlet 15 is in fluid communication through the flow selection element 55 when the flow selection element 55 is in the above-mentioned first position. Similarly, the return inlet 14 and the second return outlet 16 is in fluid communication through the flow selection element 55 when the flow selection element 55 is in the above-mentioned second position. In this way a user can adjust the inlet flow, the DPR inlet flow, the outlet flow, and the return flow by a single rotating motion of the flow selection element 55 around the centre axis A e.g. via an electronic actuator connected to the spindle 54 which in this embodiment is provided at an axial end of the valve 1' opposite the DPR 100. The skilled person will understand that it is possible to provide the spindle for the actuator at the same axial end of the valve as the DPR.

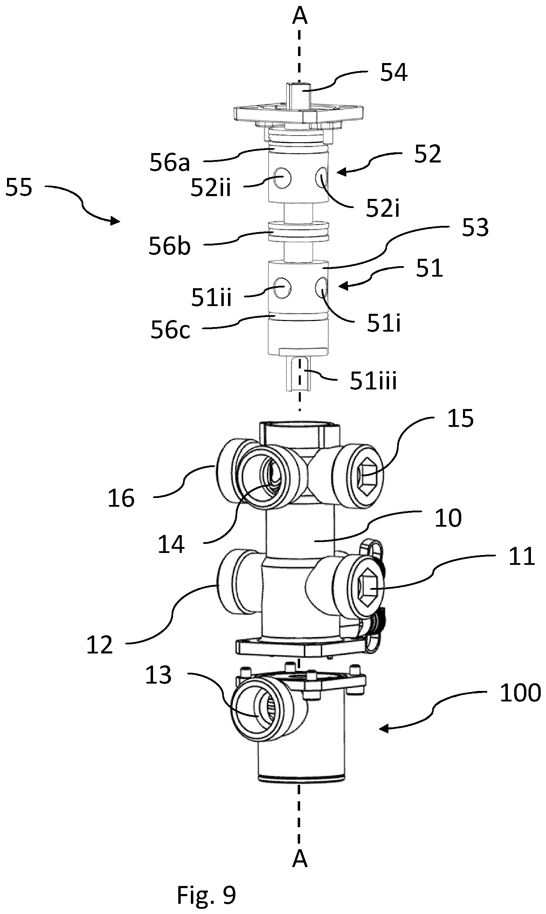

The return inlet 14, the first return outlet 15, and second return outlet 16 are arranged in a third radial plane T3 perpendicular to the centre axis A and offset from the first and second radial planes T1 and T2 at a third axial position. A second flow passage 52 comprised in the flow selection element 55 provides a fluid connection between the return inlet 14 and the first return outlet 15 and/or the second return outlet 16, as best seen in Fig. 9 taken together with Figs. 10iii, 11iii, and 12iii.

The first return outlet 15 and second return outlet 16 are arranged with an angle of approximately 180 degrees between them and with an angle of approximately 90 degrees between each of the first and the second return outlets 15, 16 and the return inlet 14.

The second flow passage 52 comprises a radial section 52b having a third radial channel and a fourth radial channel extending radially at a right angle relative to each other and connected at a junction arranged on the centre axis A. The third radial channel extends to the circumference of the flow selection element 55 at opening 52i and the fourth radial channel extends to the circumference of the flow selection element 55 at opening 52ii. Via the third and fourth radial channels return outlets 15 and 16 are selectively connectable to the return inlet 14.

Figs. 10i, 10ii, 11i, 11ii, 12i, and 12ii are similar to Figs. 5i, 5ii, 6i, 6ii, 7i, and 7ii, though some of the reference numerals are slightly different, showing the configuration of the openings by the inlets 11, 12, and the flow selection element 55 and the flow regulator element 105, respectively.

Figs. 10iii, 11iii, and 12iii show the additional view of the return inlet 14, first return outlet 15, and second return outlet 16 in the third radial plane T3 in the first position, closed position, and second position, respectively. In the first position a fluid returns from the device through return inlet 14 and out through the first return outlet 15, as shown in Fig. 10iii. In the second position a fluid returns from the device through return inlet 14 and out through the second return outlet 16, as shown in Fig. 12iii.

Fig. 13 shows a modified version of the valve 1' shown in Fig. 8. In this modified version of the valve 1", an additional axial return inlet 17 is arranged at an axial end of the valve 1" and the return inlet 14, also referred to as a radial return inlet 14, is blocked by a cap nut (not shown) in the embodiment or mode of use shown in Fig. 13. In other embodiments, or modes of use, the radial return inlet 14 is unblocked providing two return inlets.

A fluid connection between the axial return inlet 17 and the first return outlet 15 and/or second return outlet 16 is provided by an axial section 52a of the second flow passage 52, as best shown in Fig. 15.

Additionally, to make space for the axial return inlet 17 the spindle 54 is moved from the axial end of the valve 1" to the axial middle of the valve 1". Thus, as shown in Fig. 14, the spindle 54 is coupled to the flow selection element 55 via a worm gear 57 comprising a worm element 57b and a circumferential cogwheel 57a comprised in the flow selection element 55. This provides for an accurate and high-resolution adjustment of the angular or rotational position of the flow selection element 55.

The valve 1" shown in Fig. 13 further comprises a flushing outlet 18 arranged in the first radial plane T1. The flushing outlet 18 and the outlet 13 are connected to a tube element 19 providing a common outlet 19a for connection to the device. Hereby is provided for a flushing function allowing a user to rinse the valve 1" from debris and/or dirt with a large fluid flow bypassing the flow regulator element 105 and the DPR 100.

Turning to Figs. 16 to 19, the flushing function will now be described in more details.

In Fig. 16 the valve 1" is shown in the second position where the second outlet 12 is in fluid connection with the outlet 13 via the DPR 100, as visualized by the black arrows. The channel connections in first, second, and third radial plane T1, T2, and T3 for the second position are shown in Figs. 17i, 17ii, and 17iii, respectively. Looking first at Fig. 17i, which, apart from details regarding the flushing outlet 18, is similar to Figs. 7i and 12i, the fluid flows through inlet 12, down via the axial section 51a. The fluid flow continues out through the overlap opening 22 shown in Fig. 17ii, which is similar to Figs. 7ii and 12ii, to the DPR 100 and out through the tube element 19 towards the device, see Fig. 16. Looking at Fig. 17iii, the fluid returns from the device through the axial return inlet 17, as best seen in Fig. 15, by the axial end of the valve 1", continues down through the axial section 52a and out through the second return outlet 16. As noted above, in this embodiment or mode of use the radial return inlet 14 is blocked by a cap nut (not shown).

To enable flushing via the second inlet 12, as shown as an example in Fig. 18, the flow selection element 55 is turned in the counterclockwise direction by 90 degrees relative to the second position. This is shown in Fig. 18 and Figs. 19i, 19ii, and 19iii.

Looking first at Fig. 18, the fluid flows in through the second inlet 12 and out via the flushing outlet 18. The fluid is prevented from flowing through the DPR 100 because the overlap opening 22 is not open as shown in Fig. 19ii due to the opening 51iii being aligned with neither of openings 111 nor 112. The fluid flows through to the device and returns via the axial return inlet 17, downwards through the axial section 52a and out via the second return outlet 16. Thus, in this mode of use, the fluid does not enter the radial return inlet 14 which, as mentioned above, is blocked by a cap nut (not shown).

Similarly, the flushing via the first inlet 11 can be achieved by turning the flow selection element 270 degrees in the clockwise direction relative to the position shown in Figs. 19i to 19iii. Consequently, the following functions can be achieved over the span of approx. 270 degrees rotation of the flow selection element 55: Starting from the position for flushing via the second inlet 12 as shown in Figs. 18 and 19i, fluid flow from the second inlet 12 via the DPR is achieved by rotating the flow selection element 55 by 90 degrees in the clockwise direction to the position shown in Figs. 7i, 12i, and 17i. Rotating the flow selection element 55 a further 45 degrees in the clockwise direction, the closed position is achieved as shown in e.g. Figs. 6i and 11i. Rotating the flow selection element 55 a further 45 degrees in the clockwise direction, a fluid flow via the first inlet 11 through the DPR 100 is achieved as e.g. shown in Figs. 5i and 10i. Rotating the flow selection element 55 a further 90 degrees, flushing via the first inlet 11 through the flushing outlet 18 is achieved. A blocking mechanism (to be described below) is provided to ensure that the flow selection element 55 cannot be rotated more than the explained 270 degrees.

While in the mode of use indicated in Figs. 13 to 19 (19i, 19ii, and 19iii) the tube element 19 is connected to the first outlet 13 and the flushing outlet to provide the common outlet 19a and only the axial inlet 17 is used for receiving fluid from the device whether such fluid has been delivered to the device through the first outlet or the flushing outlet 18, it is possible in another mode of use, not shown, to flush the valve 1" while bypassing the device.

Thus instead of the tube element 19 shown in Figs 13, 15, 16, and 18, it is possible to use e.g. a U-shaped tube element connecting the flushing outlet 18 directly with the radial return inlet 14, which in such case should not be blocked.

It is noted from Fig. 19iii that when the flow selection element 55 is in the position for flushing the radial section 52b of the second flow passage 52 is aligned on one hand with the radial return inlet 14 and on the other hand with the second return outlet 16. It is further noted that rotating the flow selection element approx. 270° clockwise will align the radial section 52b of the second flow passage 52 on one hand with the radial return inlet 14 and on the other hand with the first return outlet 15.

Referring to Fig. 20, the flow selection element 55 is provided with protrusion 125 (also visible in Fig. 14) and two bosses 126a and 126b are provided in the housing 10 at fixed positions. In Fig. 20 the protrusion 125 is shown to be abutting the first boss 126a and the flow selection element I 55 is in the position shown in Figs. 18, 19i, 19ii, and 19iii for flushing from the second inlet 12. The boss 126a will not allow turning the flow selection element 55 further in the counterclockwise direction whereas the second boss 126b will allow turning the flow selection element 55 approx. 270° in the clockwise direction. Thus, the protrusion 125 and the two bosses 126a and 126b constitute a physical blocking mechanism limiting a possible angle of rotation of the flow selection element 55 around a centre axis A and in the present embodiment allowing approx. 270° of rotation of the flow selection element 55. Rotational stops could alternatively be arranged as edges between the selection element 55 and the surrounding parts, the housing 10 and the regulator element 105.

The provision of physical blocks or stops for the rotation of the flow selection element 55 is a benefit to the regulation of the angular position of the flow selection element 55 by means of an actuator (not shown) connected to the spindle 54.

It should be noted that by appropriate arrangement of the protrusion and bosses the physical blocking mechanism may be arranged to allow approx. 90° of rotation as is relevant in the embodiments of valves 1 and 1'.

Referring now to Figs. 8, 9, 2so-called pt-plugs are provided for measuring P1 and P2. Thus, Fig 8 shows a first pt-plug 127 for measuring P1 and a second pt-plug 128 for measuring P2.

A pt-plug is as such well known to the skilled person and provides access to an area in a valve where a certain pressure that it is wished to measure is present.

In the present valves 1, 1', and 1" internally of a wall 10a of the housing an axial space is provided between the wall 10a and the flow selection element 55. This space is divided in axial sections by sealings provided by O-rings 56a, 56b, 56c in O-ring grooves, see Fig. 9. Different pressures are present at different axial sections.

Thus, at the section between O-rings 56b and 56c the pressure P1 is present and below O-ring 56c the pressure P2 is present as will be explained below.

Initially, it should be noted that the transitions between the first inlet 11, the second inlet 12, the return inlet 14, the first return outlet 15, and the second return outlet 16, respectively, and the flow selection element 55 are all sealed in the same way as will now be explained in relation to the first inlet 11 with reference to Fig. 2.

At the first inlet 11 the housing 10 is provided with a socket piece 130 having an internal thread. A tubular connecting piece 131 having a narrow section and a wide section both having an external thread is screwed into the socket piece 130. A sealing ring 132 conforming on one side the cylindrical surface of the flow selection element 55 adjacent the first inlet 11 and being generally plane on the other side facing the tubular connecting piece 131. An O-ring 133 is provided between the tubular connecting piece 131 and the sealing ring 132 to provide for elasticity in the connection between the tubular connecting piece 131 and the sealing ring 132 to make sure that a sufficient but not excessive pressure is applied to sealing ring 132 and thus to the flow selection element 55. Thus, at least at the first inlet 11 and the second inlet 12 a sealing, in the form of sealing ring 132 and O-ring 133 is provided to seal between the respective inlet 11,12 and the flow selection element 55. A sealing contact surface on the flow selection element 55 may be cylindrical or spherical.

Turning to Fig. 7i, or Fig. 12i that shows similar, it is seen that whereas the opening 51ii is connected to the second inlet 12 allowing fluid flow into the first flow passage 51, the opening 51i is positioned adjacent to the wall 10a of the housing at a position where a section of the above-mentioned space, namely a narrow space 134 is left between the flow selection element 55 and the housing 10. Through this narrow space 134 the pressure P1 may propagate from the second inlet 11 and between the O-rings 56b and 56c and thus to the position where the first pt-plug 127 is mounted.

It should be noted that the first inlet 11 is like the second inlet 12 provided with a sealing ring 132, etc. and accordingly fluid and pressure from the second inlet 12 cannot enter the first inlet 11 when the flow selection element 55 is in the position shown in Fig. 7i.

Regarding measurement of P2 reference is now made to Figs. 2, 3, and 4.

Fig. 2 shows the O-ring 56c and below the O-ring 56c another section of the above-mentioned space, namely a second narrow space 135 is present between the flow selection element 55 and the wall 10a of the housing at the position where the second pt-plug 128 is mounted.

Referring to Fig 4. the pressure P2 is primarily present in the space between the flow regulator element 105 and the throttle member 106 and especially the circumferential rim part 106a thereof that, together with the circumferential valve seat 101, provides the pressure drop between P2 to P3.

The flow regulator element 105 comprises a flange 136 having an upper side abutting against the flow selector element 55 and an underside abutted on by part of the housing. The flow regulator element 105 further comprises a cylindrical or conical part comprising the above-mentioned surface of revolution 105a, and the flange 136 comprises a pressure communication channel, such as a radial grove or a hole (not shown), thus allowing the P2 pressure to reach the second narrow space 135 and the second pt-plug 128.

At the transition between the cylindrical or conical part and the flange 136 the pressure P2 is present and due to the described pressure communication channel, the pressure P2 can propagate to the radially outwards and through a capillary channel or tube to the second narrow space 135 where the second pt-plug 128 is mounted for measurement of the pressure P2.

Having thus described embodiments of the invention it should be noted that details described in relation to one embodiment are also found in the other embodiments unless otherwise is indicated.

Further it should be understood that variations are possible within the scope of the appended claims.

## Claims

1. A control valve (1) for selectively regulating a fluid flow to a device, such as a heating or cooling convector, said control valve (1) comprising a housing (10) comprising:
a first inlet (11) adapted to be connected to a first fluid source;
a second inlet (12) adapted to be connected to a second fluid source; and
a first outlet adapted (13) to be connected to a device,
a flow selector (50) arranged in the housing downstream of the first inlet (11) and the second inlet (12) and upstream of the first outlet (13),
and a differential pressure regulator (100) arranged in the housing downstream of the flow selector (50) and upstream of the first outlet (13),
where the flow selector (50) comprises a flow selection element (55) rotatable around a centre axis (A) between a first angular position in which the first inlet (11) is in fluid communication with the first outlet (13) and a second angular position in which the second inlet (12) is in fluid communication with the first outlet (13),
said differential pressure regulator (100) comprising a first side and a second side, a channel (113) being provided to transfer a pressure from a selected one of the first inlet (11) and the second inlet (12) to the first side of the differential pressure regulator (100),
**characterized in that** said flow selection element (55) comprises a first flow passage (51) comprising an axial section (51a) extending a distance along the centre axis (A) for said first flow passage to be connectable at a first axial position along the centre axis (A) to selectively one of said first inlet (11) and said second inlet (12) by rotation of the flow selection element (55) around the centre axis (A), and to be connectable to the first outlet (13) at a second axial position along the centre axis (A), and
that the differential pressure regulator (100) is provided at a first axial end of the control valve (1) and comprises a throttle member (106) comprising a circumferential rim part (106a) extending around the centre axis (A), the throttle member (106) being axially movable along the centre axis (A) for the circumferential rim part (106a) to approach, due to pressure transferred through the channel (113), a circumferential valve seat (101) for said circumferential rim part (106a),
whereby a flow path extends from selectively one of said first and second inlet (11, 12), through the first flow passage (51) of the flow selection element (55), past the throttle member (106), between the circumferential rim part and the circumferential valve seat, and out through the first outlet (13).

2. A control valve according to claim 1, wherein said flow selection element (55) comprises a first radial channel and a second radial channel extending from the axial section (51a) to a circumference of the flow selection element (55), said first radial channel and said second radial channel extending radially at an angle, preferably at right angles, relative to each other, said first radial channel and said second radial channel being respectively and selectively connectable to the first inlet (11) and/or the second inlet (12), wherein preferably said first and second radial channel are positioned in a first radial plane (T1) perpendicular to the centre axis (A).

3. A control valve (1) according to claim 1 or 2, wherein the flow selector (50) comprises a flow regulator element (105) said flow selection element (55) and said flow regulator element (105) comprise respective coaxial surfaces of revolution (55a; 105a) comprising respective openings (111, 112; 51iii) capable of being brought into and out of alignment to provide an overlap opening by rotation of the flow selection element (55) and the flow regulator element (105) relative to each other around the centre axis (A) for adjustment of a flow through said overlap opening (111, 112; 51iii),
whereby preferably one of said openings (51iii) in a first of said coaxial surfaces of revolution and one of said openings (111,112) in a second of said coaxial surfaces of revolution comprise edges following different courses along the centre axis (A), said edges being provided at different sides of the respective openings in a circumferential direction, and/or
whereby preferably one of said coaxial surfaces of revolution (55a; 105a) of said flow selection element (55) and said flow regulator element (105) comprises one opening (51iii) of said openings and the other of said coaxial surfaces of revolution (55a; 105a) comprises two openings (111, 112) of said openings,
whereby preferably said one opening (51iii) and at least one of said two openings (111,112) comprise edges following different courses along the centre axis (A),
wherein preferably said flow regulator element (105) is a stationary element in the housing (10),
wherein preferably said surfaces of revolution (55a; 105a) are conical or cylindrical surfaces,
wherein preferably the coaxial surface of revolution (55a) of the flow selection element (55) is an external surface and positioned radially closer to the centre axis (A) than the coaxial surface of revolution (105a) of the flow regulator element (105) which is an internal surface, and
wherein preferably the flow selection element (55) is axially open at an end adjacent the outlet (13), and the flow regulator element (105) comprises an aperture (113) providing said channel for transferring a pressure from a selected one of the first inlet (11) and the second inlet (12) to the first side of the differential pressure regulator (100).

4. A control valve according to any one of claims 1 to 3, wherein the control valve further comprises a return inlet (14; 17), a first return outlet (15) and a second return outlet (16),
where the return inlet (14; 17) and the first return outlet (15) are in fluid communication through the flow selection element (55) when the flow selection element (55) is in the first position, and
where the return inlet (14; 17) and the second return outlet (16) are in fluid communication through the flow selection element (55), when the flow selection element (55) is in the second position, and
wherein preferably the return inlet is a radial return inlet (14), and the radial return inlet (14), the first return outlet (15), and the second return outlet (16) are positioned in a second radial plane (T2) perpendicular to the centre axis (A).

5. A control valve according to claim 4, wherein said flow selection element (55) at a third axial position along the centre axis (A) comprises a third radial channel and a fourth radial channel extending from an internal space to the circumference of the flow selection element (55), said third radial channel and said fourth radial channel extending radially at an angle, preferably at right angles, relative to each other, said third radial channel and said fourth radial channel being respectively and selectively connectable to the first return outlet (15) and/or the second return outlet (16), wherein preferably said third radial channel and said fourth radial channel, at least at the circumference of the flow selection element (55), are positioned in a third radial plane (T3) perpendicular to the centre axis (A), and
wherein preferably the third axial position is found on the opposite side of the first axial position relative to the second axial position.

6. A control valve according to claim 4 or 5, wherein a spindle part (54) of the flow selection element (55) is provided at an opposite axial end of the control valve relative to the first axial end to be connected to an actuator for rotating the flow selection element (55).

7. A control valve according to claim 5, wherein the return inlet comprises an axial return inlet (17) positioned at an opposite axial end of the control valve relative to the first axial end, and
wherein the internal space is provided by a second flow passage (52a) extending from the third and fourth radial channels to an axial end of the flow selection element (55) to be connected to the axial return inlet.

8. A control valve according to claim 7, wherein the housing comprises a flushing outlet (18) positioned in a first radial plane (T1) or the first radial plane (T1) perpendicular to the centre axis (A) in which also the first inlet (11) and the second inlet (12) are positioned.

9. A control valve according to claim 7 or 8, comprising a means for rotating the flow selection element (55), said means being provided between the two axial ends of the control valve (housing), and comprises a connection element for connection with an actuator,
wherein preferably said means comprises a circumferential cogwheel (57a) provided on the flow selection element (55), and
further preferably comprising a rotating device, such as a worm element (57b) engaging the cogwheel (57a), said rotating device (57b) comprising a spindle part to provide the connection element for connection with the actuator.

10. A control valve according to any one of claims 7 to 9, comprising both said radial return inlet (14) and said axial return inlet (17).

11. A control valve according to claim 8 or claims 8 and 9 or claims 8 and 10, comprising a tube element ( Not shown) connected to the flushing outlet (18) and to the radial return inlet (14).

12. A control valve according to claim 8 or claims 8 and 9 or claims 8 and 10, comprising a tube element (19) connected to the flushing outlet (18) and to the first outlet (13) whereby said tube element (19) comprises a common outlet.

13. A control valve according to any one of claims 1 to 12, comprising a physical blocking mechanism (125, 126a, 126b) limiting a possible angle of rotation of the flow selection element (55) around a centre axis (A).

14. A control valve according to any one of claims 1 to 13, wherein at least at the first inlet (11) and the second inlet (12) a sealing (132, 133) is provided to seal between the respective inlet (11,12) and the flow selection element (55), an axial space (134, 135) being present between the flow selection element (55) and a wall (10a) of the housing, sealings (56c) are provided to divide axial sections (134, 135) of said space, and wherein preferably a pt-plug (127, 128) is mounted in the wall (10a) of the housing at at least one of said axial sections (134, 135).
